# EUROPEAN PATENT APPLICATION

(11) **EP 1 677 496 A1**
(43) Date of publication of application: **05.07.2006**
(21) Application number: 05000037.1
(22) Date of filing: 04.01.2005
(51) Int. Cl.: H04M 1/253, G06F 3/033

(54) **Telecommunication pointing device**

(71) Applicant: ORtek Technologies, Inc., Chung Ho City, Taipei Hsien (TW)
(72) Inventor: Wu, Yen-Chun, Shu Lin City Taipei Hsien (TW); Huang, Li-Chun, Chung Ho City Taipei Hsien (TW)
(74) Representative: Haft, von Puttkamer, Berngruber, Czybulka

(57) **Abstract**

The present invention is to provide a telecommunication pointing device comprising a transmission interface control unit (e.g. a USB interface control unit), a cursor detection and control unit and an audio control unit are disposed in a chassis thereof, wherein the transmission interface control unit is communicably connected with a computer; the cursor detection and control unit detects the position of the pointing device, converts the detected position into coordinate signals of the cursor and then transfers the coordinate signals to the computer; and the audio control unit receives or transmits audio signals from or to the computer, such that when a driver program of the network telephone is executed on the computer mainframe, at least a function key disposed on the pointing device can be employed to convert the telecommunication pointing device between a normal pointing device and a network telephone, achieving the purpose of being both an input device and a network telephone.

## Description

### FIELD OF THE INVENTION

The present invention is to provide a pointing device, more particular to a telecommunication pointing device capable of being converted into a network telephone by employing a function key disposed thereon, and yet keeping the original function of a conventional pointing device.

### BACKGROUND OF THE INVENTION

In the past few decades, a huge variety of electronic products has been developed and advanced. In particular, the invention of personal computer has enormously increased the speed of information processing and transmission, which enhanced people's working efficiency in a great scale. Therefore, personal computer has become one of the most important tools in our daily life and in the work place. On the other hand, the operation of a personal computer requires the presence of some standard peripheral devices. Amount them, the pointing device, such as a mouse, and the network interface have gradually become an industrial standard. By employing the pointing device, one can easily control the computer and input data therein. The network interface then connects the personal computer with other computers over the world, allowing us to send and receive information therethrough.

Conventional telephone system sends and receives audio signals through a Public Switched Telephone Network (PSTN), which performs circuit switches between the dialing end and the receiving end by the telephone companies or the telecommunication agencies of local governments. When one telephone call is connected between the dialing end and the receiving end, the person who dials should pay for the fee according to the connection distance. If an international phone call is made, the fee then becomes extremely high. Furthermore, the telephone companies or telecommunication agencies need to build their own networks in order to process the audio, video or other information transmitted. Since each network requires satisfaction of different standards, not only the cost of installation, maintenance and upgrade is extremely high, but also a difficult task to integrate different networks together.

In recent years, the Internet has emerged, and the broadband network has gradually gain its popularity worldwide. Under such a development trend, various Internet Protocols have been developed to process voice, text, video or other information. All these information are rapidly exchanged through the Internet by means of digital packets. In particular, a network audio transmission technology is developed, which requires the use of an Internet Protocol phone incorporating with a Voice over Internet Protocol (VoIP) and a VoIP Gateway. The audio signals from the network telephone and network device of the dialing end are first digitized, compressed and packaged via the VolP and then transmitted to the network telephone and the network device of the receiving end by means of network packets. The receiving end then performs a reverse operation on the received packets, so as to hear the audio signals from the dialing end, thereby performing mutual conversation. In this manner, the user can save a lot on long distance phone bills by not using the conventional PSTN to make phone calls.

However, in order not to occupy too much space on desktop or in storage (when carrying outdoors) due to the installation of the network telephone, the industry has devoted to develop network telephones that is combined with conventional computer peripheral devices. In this way, the cost and the occupation space of this additional network telephone can be reduced. The conventional computer peripheral device with network telephone accessibility is

### SUMMARY OF THE INVENTION

It is therefore an object of the present invention to provide a telecommunication pointing device that can be converted into a network telephone by employing a function key disposed thereon, and yet keeping the original function of a conventional pointing device.

The telecommunication pointing device of the present invention comprises a chassis. A transmission interface control unit (e.g. a USB interface control unit), a cursor detection and control unit and an audio control unit are disposed in the chassis. The transmission interface control unit is communicably connected with a computer mainframe by a wired cable or a wireless means. The cursor detection and control unit detects the position of the pointing device and converts the detected position into coordinate signals of the cursor. The coordinate signals are then transferred to the computer mainframe through the transmission interface control unit. The audio control unit receives audio signals from the computer mainframe through the transmission interface control unit, or transmits the generated audio signals to the computer mainframe through the transmission interface control unit. In this manner, when a driver program of the network telephone is executed on the computer mainframe, at least a function key disposed on the pointing device can be employed to convert the telecommunication pointing device between a normal pointing device and a network telephone. The telecommunication pointing device of the present invention can thus achieve the purpose of being both an input device and a network telephone.

The chassis further comprises an audio emitter (e.g. a speaker) at one end thereof and an audio receiver (e.g. a microphone) at another end thereof. The audio emitter and the audio receiver are connected with the audio control unit. The audio emitter plays the audio signals received in the audio control unit from the transmission interface control unit, while the audio receiver converts voice of the user into audio signals and transmits away. The user can thus communicate with another user at a remote end through the network.

When the transmission interface control unit detects an incoming network phone call from the computer mainframe, the transmission interface control unit then automatically terminate the connection of the cursor detection and control unit, and/or the power supply of the cursor detection and control unit. At the same time, the connection with the audio control unit is initiated. In this manner, one can save the meaningless power consumption when the cursor detection and control unit is not in use, and successfully convert the pointing device into a network telephone. When the transmission interface control unit detects that the network phone call is being terminated or hanged up, the connection of the audio control unit is automatically terminated. At the same time, the connection and power supply of the cursor detection and control unit are recovered, thereby bringing the telecommunication pointing device into a normal operating condition.

The chassis further comprises a control button. The control button is used for picking up an incoming network phone call when the transmission interface control unit detects an incoming network phone call from the computer mainframe, or hanging up a network phone call.

The chassis further comprises at least a rotating wheel. The rotating wheel can be used to control the volume of the audio signal played by the audio control unit, when the transmission interface control unit detects an incoming network phone call from the computer mainframe, and initiates the connection with the audio control unit. The rotating wheel can also be used to browse the phone book preinstalled in the computer mainframe, when the transmission interface control unit detects that the user is dialing a network phone call, and make selections.

The above and other objects, features and advantages of the present invention will become apparent from the following detailed description taken in conjunction with the accompanying drawings.

### BRIEF DESCRIPTION OF THE DRAWINGS

FIG. 1 is a top elevation of the telecommunication pointing device of the present invention.
FIG. 2 is a block diagram illustrating the electrical circuit of the telecommunication pointing device of the present invention.
FIG. 3 is a bottom elevation of the telecommunication pointing device of the present invention.
FIG. 4 is a flow chart illustrating a method for converting the telecommunication pointing device into a network telephone.

### DETAILED DESCRIPTION OF THE PREFERRED EMBODIMENTS

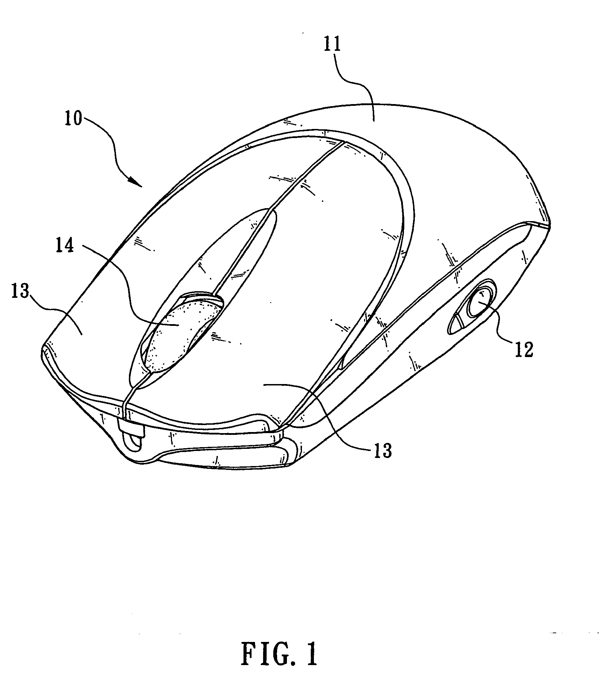

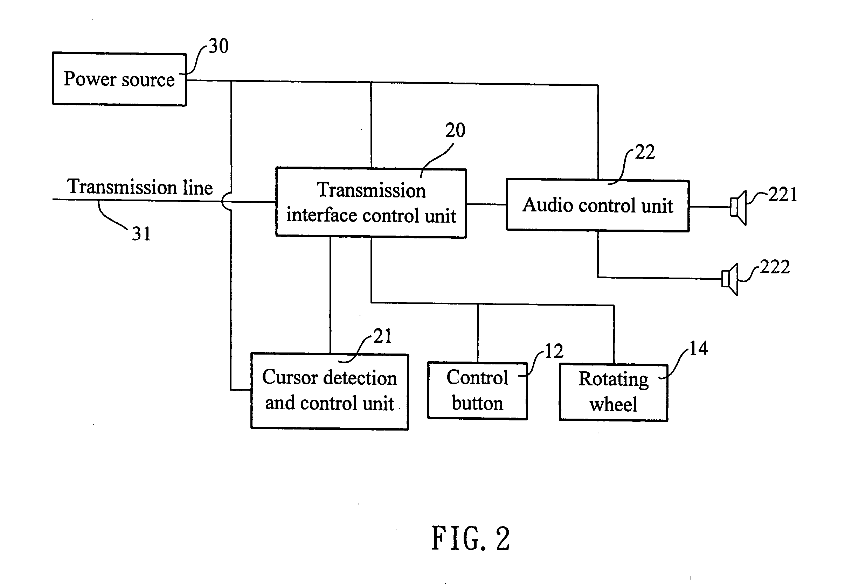

Referring to FIG. 1 and FIG. 2, a telecommunication pointing device of the present invention is illustrated. The pointing device 10 comprises a chassis 11, a transmission interface control unit 20 disposed in the chassis 11, a cursor detection and control unit 21 and an audio control unit 22. The transmission interface control unit 20 can be any data transmission interface, including a wired or a wireless interface, so long as the pointing device 10 is communicably connected with a computer mainframe (not shown). In this particular embodiment, the transmission interface control unit 20 is a universal serial bus (USB) interface.

Referring again to FIG. 1 and FIG. 2, the cursor detection and control unit 21 comprises a circuit and means for detecting the position of the pointing device 10. Let's take an optical pointing device for example, the cursor detection and control unit 21 comprises a light emitting diode, an image capturing element and a control circuit. When the pointing device 10 is moved, the light emitting diode emits a light beam aiming at the surface where the pointing device 10 is positioned. At the mean time, the image capturing element can continuously capture the light beam reflected from the surface. The control circuit then calculated the moving direction and distance of the pointing device 10 according to the continuous changes of the captured light beam by using a built-in algorithm, and transformed the calculated results into the coordinate signals of the cursor. The coordinate signals are then transferred to the computer mainframe through the transmission interface control unit 20. However, it is appreciated that the cursor detection and control unit 21 can be applied to other pointing devices, such as a track ball pointing device. It is also appreciated that any device that can calculate the moving direction and distance of the pointing device 10, transform the calculated results into the coordinate signals of the cursor, and transfer the coordinate signals to a computer mainframe through the transmission interface control unit 20, can be understood as a cursor detection and control unit 21 of the present invention.

The audio control unit 22 receives the audio signals from the computer mainframe through the transmission interface control unit 20, or transmits the audio signals from the pointing device 10 to the computer mainframe through the transmission interface control unit 20. After the user executes a driver program of network telephone on the computer mainframe, the pointing device 10 can be converted back and forth between a normal pointing device and a network telephone for receiving or dialing phone calls by using at least a control button 12. Therefore, the telecommunication pointing device 10 can be employed to input data and to make phone calls through the network.

It is noted that since the transmission interface control unit 20 can connect the pointing device 10 to a computer mainframe either by a wired cable or by wireless means, the means for supplying power to the pointing device varies accordingly. Referring to FIG. 2, when the transmission interface control unit 20 is wirelessly connecting the pointing device 10 with the computer mainframe, a power source 30 is included in the chassis 11 for driving the operation of each unit of the pointing device 10. On the other hand, when the transmission interface control unit 20 is connecting the pointing device with the computer mainframe through a cable 31, the power is then supplied from the computer mainframe through the cable 31.

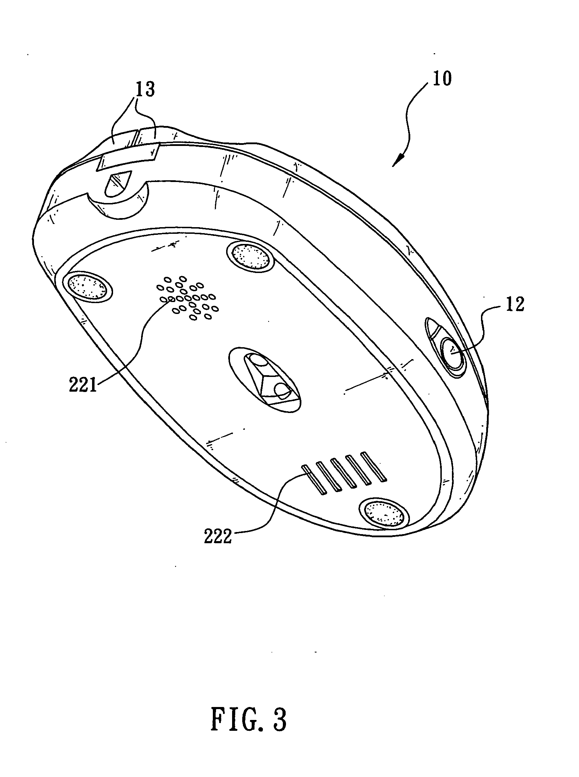

In addition, referring to FIG. 2 and FIG. 3, one end of the chassis 11 further comprises an audio emitter 221 (e.g. a speaker) disposed thereon, while the other end of the chassis 11 comprises an audio receiver 222 (e.g. a microphone.) The audio emitter 221 and the audio receiver 222 are both connected with the audio control unit 22. The audio emitter 221 plays the audio signals on the audio control unit 22 received from the transmission interface control unit 20. The audio receiver 222 transforms the voice of the user into audio signals and sends the audio signals away through the audio control unit 22, thereby communicating with another user at a remote end of the network.

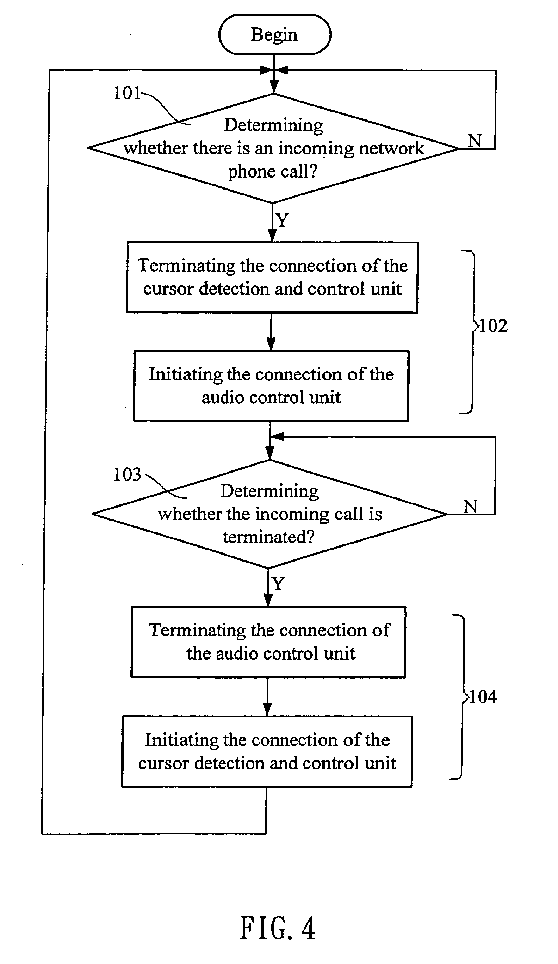

Before using the telecommunication pointing device 10 of the present invention, one needs to preinstall a driver program on the computer mainframe. In this manner, the pointing device 10 can be converted automatically between a normal pointing device or for receiving or dialing network phone calls according to the following steps, as shown in FIG. 2 and FIG. 4.

In step 101, continuously detecting and determining whether the computer mainframe has received a network phone call. If yes, then proceed to step 102; otherwise go back to step 101.

In step 102, automatically terminating the connection of the transmission interface control unit20 and the cursor detection and control unit 21, and/or automatically terminating the power supply of the cursor detection and control unit 21. At the same time, enabling the connection of the transmission interface control unit 20 and the audio control unit 22. In this manner, one can reduce the meaningless power consumption when the cursor detection and control unit 21 is not in use, and convert the pointing device 10 into a network telephone as well.

In step 103, determining whether the network telephone signal from the computer mainframe has been terminated, or whether the user has hanged up the phone. If yes, then proceed to the following step; otherwise, maintaining the pointing device 10 as being converted to a network telephone, and continuing the conversation.

In step 104, automatically terminating the connection of the transmission interface control unit 20 and the audio signal control unit 22. At the same time, recovering the connection of the transmission interface control unit 10 and the cursor detection and control unit 21, and recovering the power supply of the cursor detection and control unit 21. Then, converting back the pointing device 10 to its normal operation status, and going back to step 101 for continuously detecting and determining whether the computer mainframe has received a network phone call.

Referring again to FIG. 1 and FIG. 2, the chassis 11 comprises at least a control button 12. The control button 12 can be used to pick up or hang up the network phone call when the transmission interface control unit 20 detects that the computer mainframe has received a network phone call. Alternatively, the user can employ the control button 12 for enabling the driver program of the network telephone before dialing a network phone call, and for dialing a network phone call.

In addition, the chassis 11 comprises at least a rotating wheel 14. When the transmission interface control unit 20 detects an incoming network phone call from the computer mainframe, and initiates the connection between the transmission interface control unit 20 and the audio control unit 22, the rotating wheel 14 is then used to control the volume of the audio signal played by the audio control unit 22. On the other hand, when dialing a network phone call, the rotating wheel 14 is used for rapidly scrolling and browsing the phone book preinstalled on the computer mainframe, and making selections.

According to the descriptions set forth above, the telecommunication pointing device 10 of the present invention is advantageous in that both the occupation space and the cost for installing an additional network telephone are reduced. By using the telecommunication pointing device of the present invention, the user can easily control the computer, input data into the computer, browse web pages, and at the same time, receive incoming network phone calls or dial network phone calls to a remote user. The convenience and accessibility of the network telephone are thus largely enhanced.

While the invention has been described by means of specific embodiments, numerous modifications and variations could be made thereto by those skilled in the art without departing from the scope and spirit of the invention set forth in the claims.

## Claims

1. A telecommunication pointing device, comprising:
a chassis;
a transmission interface control unit, which is disposed in the chassis, communicably connecting the pointing device with a computer mainframe for exchanging information;
a cursor detection and control unit disposed in the chassis for detecting and calculating the moving direction and distance of the pointing device, converting the calculated results into coordinate signals of the cursor, and transferring the calculated results to the computer mainframe through the transmission interface control unit;
an audio control unit disposed in the chassis for receiving the audio signals from the computer mainframe through the transmission interface control unit, or transferring the audio signals to the computer mainframe through the transmission interface control unit;
whereby after preinstalling a driver program of network telephone on the computer mainframe, the transmission interface control unit automatically terminates the connection of the transmission interface control unit and the cursor detection and control unit when there is an incoming network phone call, and at the same time, initiates the connection with the audio control unit, thereby converting the pointing device into a network telephone.

2. The device as recited in claim 1, wherein the transmission interface control unit terminates the power supply of the cursor detection and control unit when terminating the connection of the transmission interface control unit and the cursor detection and control unit.

3. The device as recited in claim 2, wherein the transmission interface control unit automatically terminates the connection with the audio control unit when determining whether the network phone call is being terminated or hanged up, and at the same time, initiates the connection with the cursor detection and control unit, and recovers the power supply of the cursor detection and control unit.

4. The device as recited in claim 1, wherein the chassis further comprises an audio emitter at one end thereof and an audio receiver at another end thereof, the audio emitter and the audio receiver being connected with the audio control unit, wherein the audio emitter plays the audio signals received in the audio control unit from the transmission interface control unit, while the audio receiver converts voice of the user into audio signals and transmits away.

5. The device as recited in claim 1, wherein the chassis further comprises a control button, whereby the control button is used for picking up an incoming network phone call when the transmission interface control unit detects an incoming network phone call from the computer mainframe, or hanging up a network phone call.

6. The device as recited in claim 1, wherein the chassis further comprises a control button, whereby the control button is used for enabling the driver program of network telephone when the transmission interface control unit detects that the user is dialing a network phone call.

7. The device as recited in claim 1, wherein the chassis further comprises at least a rotating wheel, whereby the rotating wheel is used to control the volume of the audio signal played by the audio control unit, when the transmission interface control unit detects an incoming network phone call from the computer mainframe, and initiates the connection with the audio control unit.

8. The device as recited in claim 1, wherein the chassis further comprises at least a rotating wheel, whereby the rotating wheel is used to browse the phone book preinstalled in the computer mainframe, when the transmission interface control unit detects that the user is dialing a network phone call, and make selections.
